# EUROPEAN PATENT APPLICATION

(11) **EP 4 336 852 A1**
(43) Date of publication of application: **13.03.2024**
(21) Application number: 23150860.7
(22) Date of filing: 10.01.2023
(51) Int. Cl.: H04N 21/482, H04N 21/431, H04N 21/462, H04N 21/61, H04N 21/81

(54) **METHOD OF RE-CONFIGURING CONTENTS PRESENTATION OF OTT SERVICE IN CONJUNCTION WITH EXTERNAL DATABASE**

(30) Priority: 06.09.2022 KR 20220112676
(71) Applicant: Aloys Inc, Seongnam-si, Gyeonggi-do 13438 (KR)
(72) Inventor: CHOI, Sung Hyeok, 16318 Jangan-gu, Suwon-si, Gyeonggi-do (KR); KIM, Kyung Hun, 13640 Sujeong-gu, Seongnam-si, Gyeonggi-do (KR)
(74) Representative: Hoefer & Partner Patentanwälte mbB

(57) **Abstract**

The present invention relates to a technology of re-configuring contents presentation of an OTT service in conjunction with an external database, in which an OTT device reconfigures a contents presentation screen in conjunction between an internal meta information database provided by an OTT service provider and an archive database provided externally and universally with respect to various contents provided by an OTT service, thereby providing contents information to a user integrally and effectively. According to the present invention, an OTT device can satisfactorily display a contents presentation screen to a user even when an internal meta information database provided by an OTT service provider is generally poor or meta information for a particular contents is provided insufficiently, and thus it is possible to always maintain high user satisfaction for the OTT device.

## Description

### BACKGROUND OF THE INVENTION

### Field of the Invention

The present invention relates to a technology which allows a user to effectively check contents information in an OTT service that generally provides contents in various categories.

Particularly, the present invention relates to a technology of re-configuring contents presentation of an OTT service in conjunction with an external database, in which an OTT device reconfigures a contents presentation screen in conjunction between an internal meta information database provided by an OTT service provider and an archive database provided externally and universally with respect to various contents provided by an OTT service, thereby providing contents information to a user integrally and effectively.

### Description of the Related Art

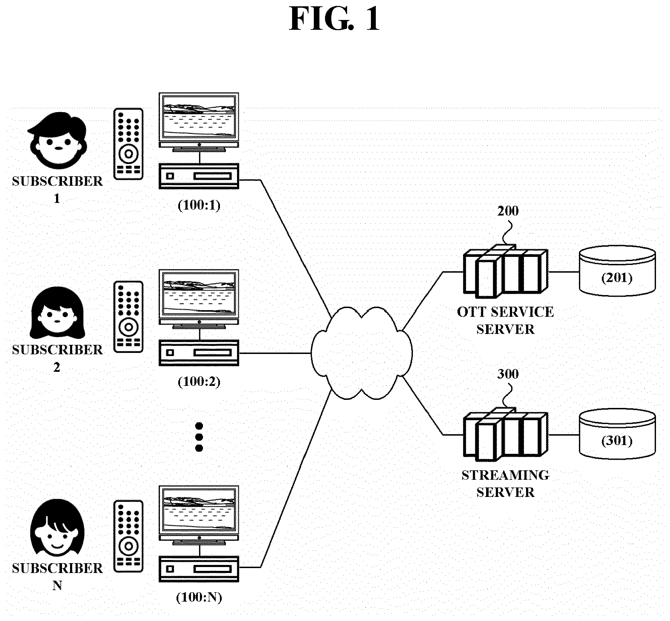

Recently, the number of users who enjoy multimedia contents in an Over-The-Top (OTT) environment is increasing. FIG. 1 is a diagram illustrating a general OTT service environment. Referring to FIG. 1, the OTT service environment includes a plurality of OTT devices 100, an OTT service server 200, and a streaming server 300.

The OTT device 100 is a device which is disposed in a subscriber space (e.g., living room or store) of an OTT service, receives contents stream from the streaming server 300 through a network, and reproduces and outputs it to a subscriber. In this case, the OTT device 100 may be an OTT terminal, a smartphone, an IP set top box, and the like. The OTT service server 200 is a device which generally manages an OTT service, and stores and manages information of an OTT service subscriber in a subscriber database 201. The streaming server 300 is a device which provides contents streaming to a subscriber in an OTT environment, and manages contents data in a contents database 301.

Meanwhile, the OTT service generally provides about 100 to 200 live channels to a subscriber, through which the subscriber can enjoy abundant contents. In addition to the live channels, the OTT service allows the subscriber to enjoy Video-On-Demand (VOD) contents or contents stored in storage.

The subscriber operates a remote controller of the OTT device 100 to select contents. In the case of live channels, it is common to select contents by operating a channel-up button and a channel-down button of the remote controller. In addition, in the case of the VOD contents and the storage contents, it is common to select contents by operating arrow keys and a selection button after pressing a menu button of the remote controller.

In a contents navigation process, a screen for guiding contents to a user is provided from the OTT service server 200 to the OTT device 100, or the OTT device 100 extracts data of contents stream and displays it on a screen as On-Screen Display (OSD) or the like. In some cases, the OTT service server 200 properly provides a contents guide screen, but also in many cases it does not. In addition, a method of guiding by the OSD or the like is inevitably poor.

Since the screen for guiding contents to a user is a very important element in user experience (UX), it is preferable to always configure contents information at a certain level or higher without depending on the OTT service server 200.

### SUMMARY OF THE INVENTION

An object of the present invention is to provide a technology which allows a user to effectively check contents information in an OTT service that generally provides contents in various categories.

Particularly, an object of the present invention is to provide a technology of re-configuring contents presentation of an OTT service in conjunction with an external database, in which an OTT device reconfigures a contents presentation screen in conjunction between an internal meta information database provided by an OTT service provider and an archive database provided externally and universally with respect to various contents provided by an OTT service, thereby providing contents information to a user integrally and effectively.

In order to achieve the above-mentioned object, the present invention provides a method in which an OTT device re-configures a contents presentation screen in conjunction between a meta information database of an OTT service server and an archive database of an archive server in an OTT service providing contents in various categories.

The method of re-configuring contents presentation of an OTT service in conjunction with an external database according to the present invention may include: identifying selection for a specific category of an OTT service (hereinafter, referred to as 'selected category'); acquiring a contents list for the selected category and internal metadata (iMeta) from the meta information database; acquiring identification information (hereinafter, referred to as 'archive access information') for accessing the archive database from the internal metadata (iMeta); acquiring external metadata (eMeta) for the contents list from the archive database by using the archive access information; identifying selection for specific contents from the contents list (hereinafter, referred to as 'selected contents'); setting a contents presentation frame in correspondence with the selected category; acquiring first data items from the external metadata (eMeta), wherein the first data items correspond to the selected category and the selected contents; acquiring second data items from the internal metadata (iMeta), wherein the second data items correspond to the selected category and the selected contents; filling a plurality of filling elements of the contents presentation frame with the first data items and the second data items, wherein the priority of the first data items is higher than the priority of the second data items; and displaying a screen according to the contents presentation frame.

The identifying selection for a specific category of an OTT service may include: acquiring a category list from an internal storage of the OTT device; and identifying selection for any one category from the category list.

The internal metadata (iMeta) may include title text, poster, description, cast, genre, year, and archive access information for each contents.

The external metadata (eMeta) includes title text, poster, description, cast, genre, year, title logo image, trailer, and backdrop for each contents.

Meanwhile, a computer program according to the present invention is stored in a non-volatile storage medium to allow a computer to execute the method of re-configuring contents presentation of an OTT service in conjunction with an external database described above by being combined with hardware.

### BRIEF DESCRIPTION OF THE DRAWINGS

FIG. 1 is a diagram illustrating a general OTT service environment.
FIG. 2 is a diagram illustrating an OTT service system for applying the present invention.
FIG. 3 is a flowchart illustrating a process of re-configuring contents presentation of an OTT service according to the present invention.
FIG. 4 is a diagram illustrating an example of a contents main guide according to the present invention.
FIGs. 5 and 6 are diagrams illustrating examples of guiding selected contents of a VOD category according to the present invention.
FIGs. 7 and 8 are diagrams illustrating examples of guiding selected contents of a TV series category according to the present invention.

### DESCRIPTION OF EMBODIMENTS

Hereinafter, the present invention will be described in detail with reference to the accompanying drawings.

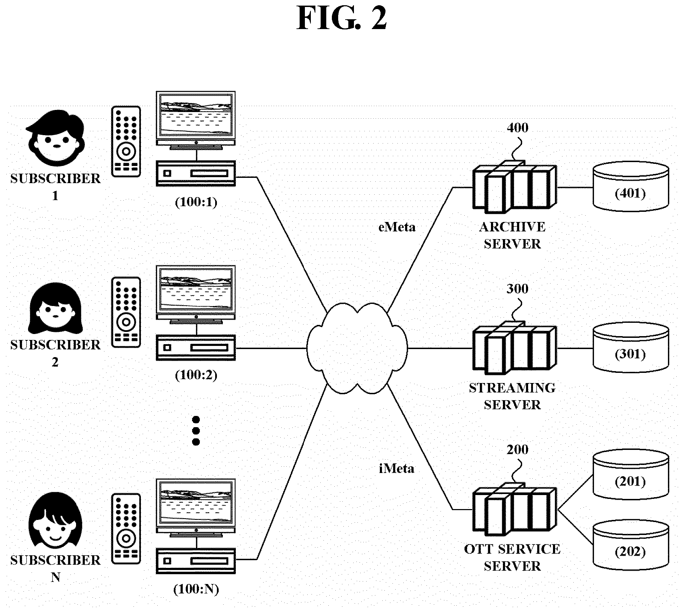

FIG. 2 is a diagram illustrating an OTT service system according to the present invention.

Referring to FIG. 2, the OTT service system according to the present invention includes a plurality of OTT devices 100, an OTT service server 200, a streaming server 300, and an archive server 400.

In the present invention, when a user (OTT subscriber) operates a remote controller to search for contents to watch, the OTT device 100 creates a contents presentation screen and displays it on the screen. For this, the OTT device 100 utilizes an internal meta information database 202 and an external archive database 401 in conjunction. The internal meta information database 202 is provided by the OTT service server 200, and the external archive database 401 is provided by the external archive server 400.

The OTT service server 200 is a server which is operated by an OTT service provider, and the archive server 400 is generally a server which is universally operated separately from the OTT service provider. The archive server 400 is a device which collects, stores, and manages metadata for a plurality of contents, and may be configured with a single server or a plurality of servers. For example, the archive server 400 may include a TMDb server (www.themoviedb.org).

In this specification, contents metadata provided by an OTT service provider is referred to as internal metadata (iMeta) for convenience, and contents metadata provided by the external archive server 400 is referred to as external metadata (eMeta) for convenience. Even in FIG. 2, the internal metadata (iMeta) and the external metadata (eMeta) are separately displayed.

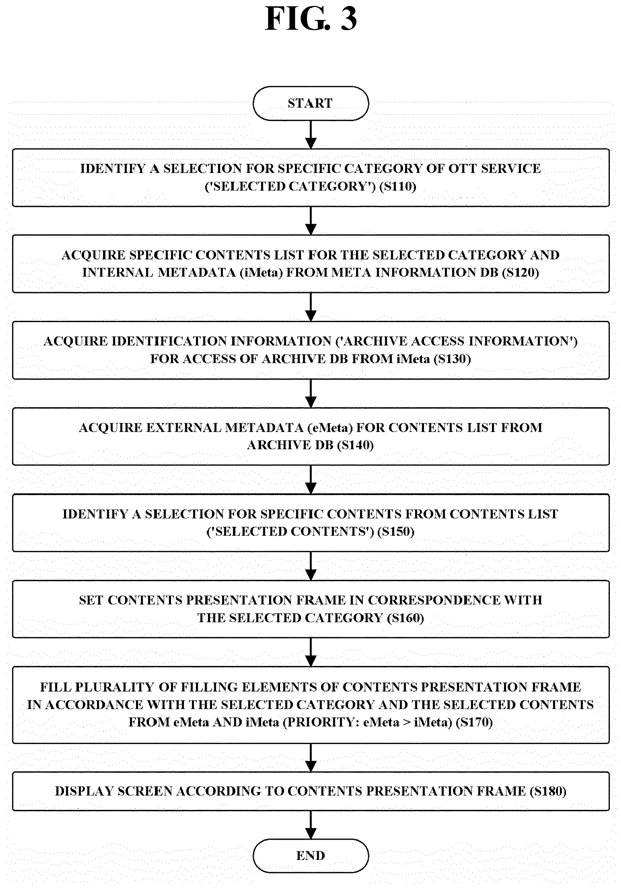

FIG. 3 is a flowchart illustrating a process of re-configuring contents presentation of an OTT service according to the present invention.

The present invention is a process in which the OTT device 100 reconfigures a contents presentation screen such that a user (OTT subscriber) effectively checks contents in an OTT service providing contents in various categories. In order to reconfigure a contents presentation screen, the OTT device 100 utilizes the internal meta information database 202 and the external archive database 401 provided universally in conjunction.

Hereinafter, the re-configuring of contents presentation of an OTT service according to the present invention will be described in detail.

First, the OTT device 100 identifies selection for a specific category of an OTT service (S 110). Hereinafter, the identified category is referred to as 'selected category' for convenience. In this specification, a category means the type of contents, for example, TV channels, TV programs, VOD, TV series, Radio, Recorded Programs, and the like.

For example, the OTT device 100 may select a category by default setting by itself, or a user may select a category by operation of a remote controller. As an example of S 110, a category list is acquired from an internal storage of the OTT device 100, and selection for any one category is identified from the category list by the OTT device 100 itself or the operation of a user. In this case, in terms of responsiveness of remote controller operation, it is preferable that the OTT device 100 caches the category list from the internal storage in advance in the course of booting.

Then, the OTT device 100 acquires a contents list and internal metadata (iMeta) for the selected category from the meta information database 202 through the OTT service server 200 (S120). The contents list means a list of serviceable contents in the selected category. The internal metadata (iMeta) is metadata provided by the OTT service provider with respect to each contents belonging to the contents list. If the OTT device 100 is a legitimate subscriber, the OTT service server 200 will provide the contents list and the internal metadata (iMeta).

In this case, the internal metadata (iMeta) may include title text, poster, description, cast, genre, year, and archive access information. Herein, the title text to the year are meta information about the contents. The archive access information means identification information for accessing the external archive database 401 to obtain additional information related to the contents. For example, when the archive server 400 is implemented with a TMDb server, the archive access information may include a TMDb ID issued to the OTT service provider.

Then, the OTT device 100 acquires archive access information (e.g., TMDb ID) from the internal metadata (iMeta) (S130). Then, the OTT device 100 acquires external metadata (eMeta) for the contents list from the archive database 401 through the archive server 400 by using the archive access information (S140). In this case, the external metadata (eMeta) may include title text, poster, description, cast, genre, year, title logo image, trailer, and backdrop for each contents.

Through the above process, the OTT device 100 obtains the OTT serviceable contents list for the selected category, and the internal metadata (iMeta) and the external metadata (eMeta) for the contents. The internal metadata (iMeta) is meta information collected and provided by the OTT service provider in its own way, and the external metadata (eMeta) is meta information provided from the external archive server 400.

When the OTT device 100 is manufactured, there are many cases where it is not known in advance which OTT service provider will use the OTT device 100. If the OTT device 100 is used together with an OTT service provider that faithfully provides the internal metadata (iMeta), the OTT device 100 will display a good contents guide screen, and user evaluation of the OTT device 100 will be also good. Meanwhile, if the OTT device 100 is used together with an OTT service provider that poorly provides the internal metadata (iMeta), the OTT device 100 will display a poor contents guide screen, and user evaluation of the OTT device 100 will be very bad.

Such a situation is a risk for a manufacturer of the OTT device 100, and even as an OTT service provider, it is burdensome to diligently collect meta information about the contents and faithfully provide internal metadata (iMeta) whenever contents is added. In the present invention, the contents guide screen of the OTT service is satisfactorily re-configured through conjunction with the external database, thereby removing the risk and burden of the manufacturer of the OTT device 100 and the OTT service provider.

Then, the OTT device 100 identifies selection for specific contents from the contents list (S150). Hereinafter, the selected specific contents is referred to as 'selected contents' for convenience.

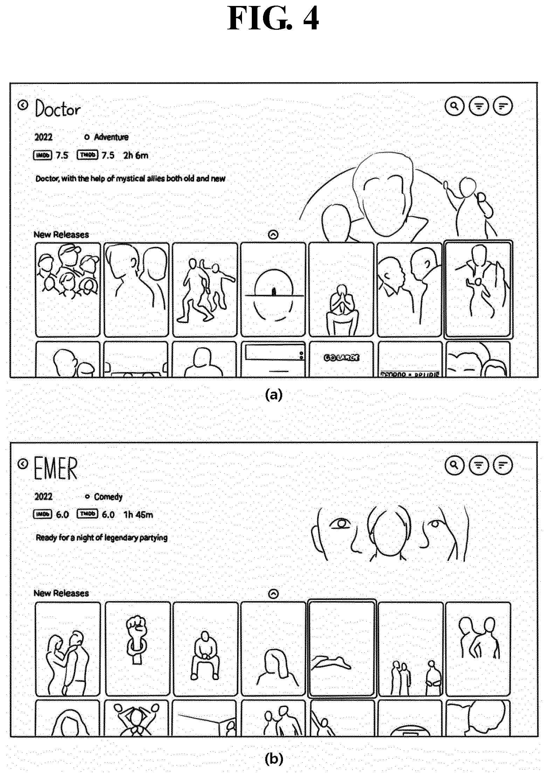

Meanwhile, the OTT device 100 sets a contents presentation frame in correspondence with the selected category (S160). As illustrated in FIG. 4 to FIG. 8, guide screens are different in structure in accordance with the type (category) of contents. Accordingly, when the category of contents to be guided is selected, the OTT device 100 sets a contents presentation frame according thereto. The contents presentation frame is information about layout and area of various expression elements in the screen, which is referred to as 'filling elements' for convenience in this specification.

Meanwhile, preferably, the contents presentation frame is set in advance at the time of manufacturing the OTT device 100. Accordingly, it is possible to always implement a satisfactory contents guide screen regardless of the OTT service provider.

Then, the OTT device 100 acquires data items corresponding to the selected category and the selected contents from the external metadata (eMeta) and the internal metadata (iMeta), for example, title text, poster, description, cast, genre, year, title logo image, trailer, and backdrop, and fills a plurality of filling elements of the contents presentation frame by using them (S170).

In this case, the priority of the external metadata (eMeta) is set relatively higher than the priority of the internal metadata (iMeta). In other words, in S140, when there is metadata validly obtained from the external metadata (eMeta) and the metadata has a format which can be input to the contents presentation frame, the metadata of the external metadata (eMeta) is used even if the internal metadata (iMeta) has the corresponding metadata.

As an example of S 170, valid data items corresponding to selected category and selected contents may be acquired from the external metadata (eMeta) and may fill the corresponding filling items of a plurality of filling elements of a contents presentation frame, and then data items corresponding to the selected category and the selected contents may be acquired from the internal metadata (iMeta) and may fill other filling items which are still in an unfilled status of the plurality of filling elements of the contents presentation.

In this case, for some items, for example, title text, the internal metadata (iMeta) may have priority.

In addition, for title logo image, logo image data may be brought from the archive database 401, but depending on implementation, a uniform resource identifier (URI) for logo image data may be obtained from the archive database 401 and logo image data may be downloaded by using the URI.

Filling elements are set in advance in the contents presentation frame, and the data items obtained from the internal metadata (iMeta) and the external metadata (eMeta) are input to the filling elements. Each of the filling elements has an attribute and a fixed area assigned, and a data item is inserted into the fixed area. For example, each of title text and title logo image has a display area fixed in advance. The title logo image is filtered and exposed in proportion to the fixed area.

For example, a title logo image is exposed, the size of which is automatically adjusted proportionally based on the height of the leftmost starting point of the fixed area on the display screen. For example, if the height of the starting point is 90 pixels (px) but the height of a title logo image is 70 px, the title logo image is scaled up to fit the height of 90 px and is inserted into the filling element. On the contrary, if the height of a title logo image is 120 px, the title logo image is scaled down to fit the height of 90 px and is inserted into the filling element.

In addition, it is preferable to display the logo image only when an aspect ratio of the title logo image fits the filling element of the contents presentation frame. When the aspect ratio of the logo image does not fit at all, the title text of the internal metadata (iMeta) is used rather than using the logo image of the external metadata (eMeta).

Then, the OTT device 100 displays the screen according to the contents presentation frame to show a user the TV screens illustrated in FIG. 4 to FIG. 8 (S180).

FIG. 4 is a diagram illustrating an example of contents main guide according to the present invention. In FIG. 4A, a title logo image is displayed at the top left as contents main guide. In FIG. 4B, a title text is displayed at the top left as contents main guide of a TV series category. In the contents main guide, detailed information (year, genre, running time, evaluation score, description) about the current selected contents (i.e., DOCTOR, EMER) are represented, and posters about various other contents items belonging to the category are displayed in grid form. Such a display configuration is defined in the contents presentation frame, and most of the information displayed here was obtained from the external metadata (eMeta).

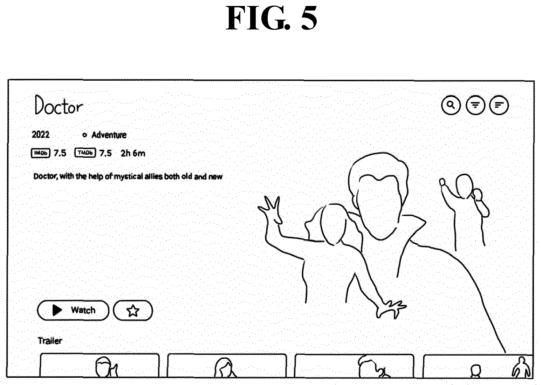

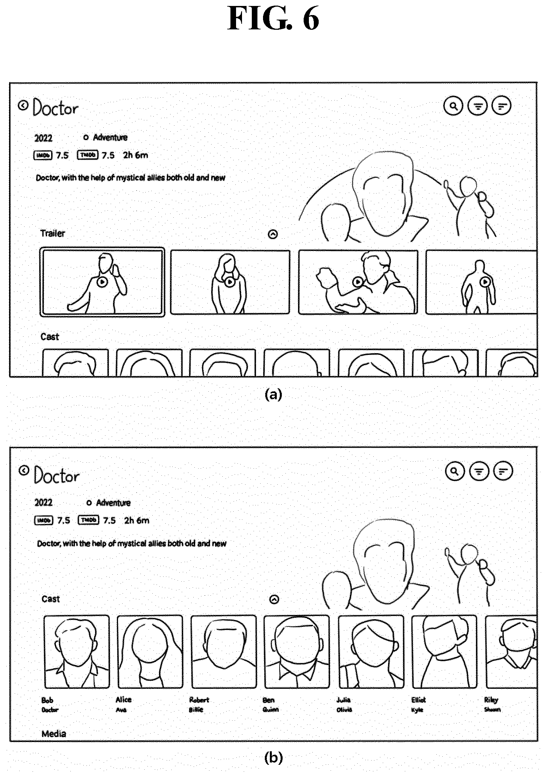

FIGs. 5 and 6 are diagrams illustrating selected contents of a VOD category according to the present invention. FIG. 5 illustrates a basic guide screen displayed when DOCTOR contents belonging to the VOD category is selected, FIG. 6A illustrates a guide screen displaying a trailer for the selected contents, and FIG. 6B illustrates a guide screen displaying cast for the selected contents. Most of the information displayed here was obtained from the external metadata (eMeta).

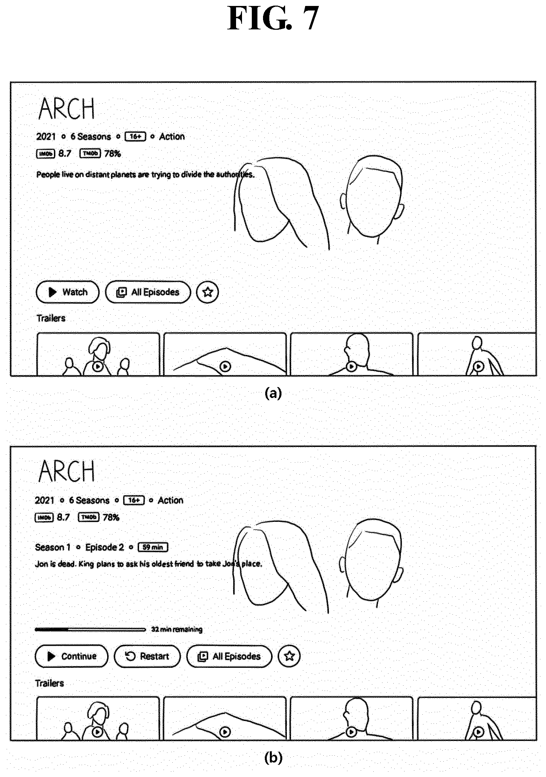

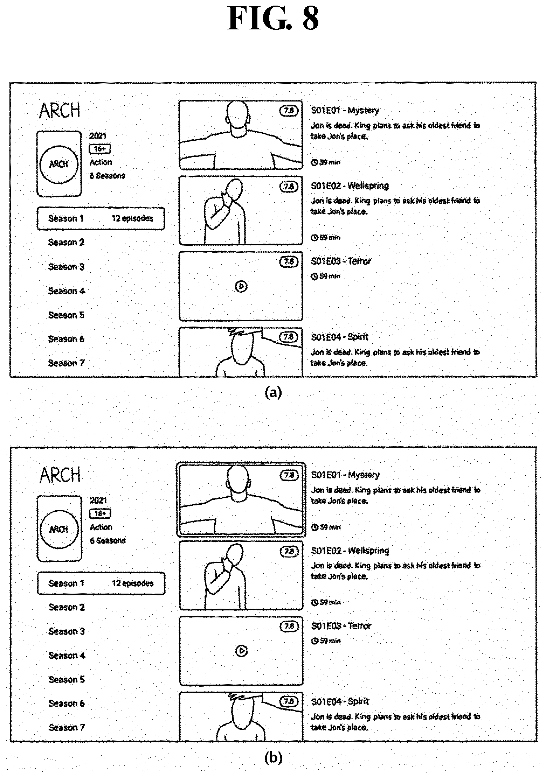

FIGs. 7 and 8 are diagrams illustrating examples which guide selected contents of TV series category. FIG. 7A illustrates a basic guide screen displayed when ARCH contents belonging to a TV series category is selected, FIG. 7B illustrates a guide screen displaying description for an individual episode of ARCH contents, FIG. 8A illustrates a guide screen displaying seasons and episode list for the selected contents, and FIG. 8B illustrates a guide screen when a specific season and episode (i.e., Episode 1 of Season 1) are selected from them.

Meanwhile, the present invention may be implemented in the form of computer readable codes on a computer-readable non-volatile recording medium. Such a non-volatile recording medium may be various types of storage devices, for example, hard disk, SSD, CD-ROM, NAS, magnetic tape, web disk, and cloud disk. The present invention may be implemented in the form of a computer program stored in a medium to execute a specific procedure in combination with hardware.

According to the present invention, there is an advantage of being able to effectively present information of contents provided by an OTT service to a user.

Particularly, according to the present invention, an OTT device can satisfactorily display a contents presentation screen to a user even when an internal meta information database provided by an OTT service provider is generally poor or meta information for a particular contents is provided insufficiently, and thus it is possible to always maintain high user satisfaction for the OTT device.

While the present invention has been described with respect to the specific embodiments, it will be apparent to those skilled in the art that various changes and modifications may be made without departing from the spirit and scope of the invention as defined in the following claims.

## Claims

1. A method of re-configuring contents presentation of an OTT service in conjunction with an external database, in which an OTT device re-configures a contents presentation screen in conjunction between a meta information database of an OTT service server and an archive database of an archive server in an OTT service providing contents in various categories, comprising:
identifying selection for a specific category of an OTT service (hereinafter, referred to as 'selected category');
acquiring a contents list for the selected category and internal metadata (iMeta) from the meta information database;
acquiring identification information (hereinafter, referred to as 'archive access information') for accessing the archive database from the internal metadata (iMeta);
acquiring external metadata (eMeta) for the contents list from the archive database by using the archive access information;
identifying selection for specific contents from the contents list (hereinafter, referred to as 'selected contents');
setting a contents presentation frame in correspondence with the selected category;
acquiring first data items from the external metadata (eMeta), wherein the first data items correspond to the selected category and the selected contents;
acquiring second data items from the internal metadata (iMeta), wherein the second data items correspond to the selected category and the selected contents;
filling a plurality of filling elements of the contents presentation frame with the first data items and the second data items, wherein the priority of the first data items is higher than the priority of the second data items; and
displaying a screen according to the contents presentation frame,
wherein the identifying selection for a specific category of an OTT service includes:
acquiring a category list from an internal storage of the OTT device; and
identifying selection for any one category from the category list.

2. The method of claim 1,
wherein the internal metadata (iMeta) includes title text, poster, description, cast, genre, year, and archive access information for each contents, and
wherein the external metadata (eMeta) includes title text, poster, description, cast, genre, year, title logo image, trailer, and backdrop for each contents.

3. The method of claim 1,
wherein the acquiring first data items from the external metadata (eMeta) includes acquiring valid data items from the external metadata (eMeta), wherein the valid data items correspond to the selected category and the selected contents,
and wherein the filling a plurality of filling elements of the contents presentation frame includes: filling first filling items of the plurality of filling elements of the contents presentation frame with the valid data items; and filling second filling items of the plurality of filling elements of the contents presentation frame with the second data items, wherein the second filling items are in unfilled status after the filling first filling items of the plurality of filling elements.

4. A computer program stored in a medium in order to execute a method of re-configuring contents presentation of an OTT service in conjunction with an external database according to any one of claims 1 to 3 in combination with hardware.
